(19) Europäisches Patentamt
European Patent Office
Office européen des brevets

(11) **EP 1 118 519 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **B60T 8/88**, G01P 21/00, G01P 21/02

(21) Anmeldenummer: **00123285.9**

(22) Anmeldetag: **27.10.2000**

(54) **Verfahren zur Erkennung des fehlerhaften Einbaus eines Steuergerätes in einem Fahrzeug**

Method for detection of a faulty installation of a control unit in a motor vehicle

Procédé de détection des défauts de montage d'un appareil de commande sur un véhicule

(84) Benannte Vertragsstaaten:
**DE FR GB NL SE**

(30) Priorität: **22.01.2000 DE 10002685**

(43) Veröffentlichungstag der Anmeldung:
**25.07.2001 Patentblatt 2001/30**

(73) Patentinhaber: **WABCO GmbH & CO. OHG**
**30432 Hannover (DE)**

(72) Erfinder:
• **Bolzmann, Oliver**
**30171 Hannover (DE)**
• **Hothan, Dirk**
**31535 Neustadt (DE)**

(74) Vertreter: **Schrödter, Manfred**
**WABCO GmbH & Co. OHG,**
**Postfach 91 12 62**
**30432 Hannover (DE)**

(56) Entgegenhaltungen:
EP-A- 1 013 526       WO-A-00/46087
WO-A-95/26285       DE-A- 19 716 391
DE-A- 19 755 431       DE-A- 19 815 779
DE-A- 19 844 913

**Beschreibung**

Die Erfindung betrifft ein Verfahren zur Erkennung des fehlerhaften Einbaus eines Steuergerätes in einem Fahrzeug gemäß dem Patentanspruch 1.

Das Verfahren dient insbesondere zur Erkennung des fehlerhaften Einbaus des Steuergerätes bei Verwendung von solchen Sensiermitteln, welche zur Sensierung spezieller, das Fahrverhalten des Fahrzeuges charakterisierenden Größen dienen, aus denen z. B. zum Zwecke einer sogenannten Fahrdynamikregelung jeweils die Gierwinkelgeschwindigkeit des Fahrzeuges, d. h. seine Drehgeschwindigkeit um die Hochachse, bestimmbar ist. Als Sensiermittel kommen hierbei vor allem ein vorzugsweise nach dem Kreisel- oder Gyro-Prinzip arbeitender Gierwinkelgeschwindigkeitssensor, ein Querbeschleunigungssensor und ein Lenkwinkelsensor in Frage. Aus den Signalen des Querbeschleunigungssensors und des Lenkwinkelsensors kann bei bekannter Fahrzeuggeschwindigkeit durch dem Fachmann geläufige Umrechnungen ebenfalls eine Größe bestimmt werden, die ein Maß für die Gierwinkelgeschwindigkeit des Fahrzeuges ist.

Aus der DE 197 16 391 A1 geht ein Fehlerdiagnosesystem für einen Gierratensensor hervor. Der Gierratensensor wird dort in einem Vierradlenksystem eines Fahrzeuges verwendet, wobei das Signal des Gierratensensors mit einem aus Signalen von Raddrehzahl-Sensoren ermittelten Giergeschwindigkeitssignal verglichen wird. Sofern eine bestimmte Abweichung zwischen den verglichenen Signalen festgestellt wird, wird der Gierratensensor als fehlerhaft bewertet. Aus der WO 00/46087 A1 ist ein Verfahren und eine Vorrichtung zur Sensorüberwachung bekannt, insbesondere für ein ESP-System (ESP = elektronisches Stabilitätsprogramm) für Fahrzeuge. Das dortige Verfahren bzw. die dortige Vorrichtung basiert darauf, dass analytische Redundanzen für eine aktuell zu überwachende Prozessführungs- oder Prozessmessgröße aus aktuell nicht zu überwachenden Prozessführungs- und/oder Prozessmessgrößen gebildet wird, Residuen durch Substraktion der erstellten analytischen Redundanzen von der aktuell zu überwachenden Prozessführungs- oder Prozessmessgröße erzeugt werden, die Residuen mit einer Residuenauswertefunktion ausgewertet werden und durch vergleichen mit einem vorgegebenen Schwellwert eine Fehlermeldung erzeugt wird.

Aus der DE 195 15 051 A1 und auch der WO 95/26285 sind Verfahren zur Fahrdynamikregelung, bei dem Sensiermittel der zuvor erwähnten Art zum Einsatz kommen, sowie einige Umrechnungsregeln zur Bestimmung der Gierwinkelgeschwindigkeit aus den Signalen des Querbeschleunigungssensors und des Lenkwinkelsensors bekannt.

Wenn bei einem Fahrdynamikregelsystem eines der zuvor erwähnten Sensiermittel verkehrt eingebaut ist, kann das Fahrdynamikregelsystem dann infolge einer unkorrekten Signalabgabe dieses Sensiermittels seine bestimmungsgemäße Aufgabe einer Stabilisierung des Fahrverhaltens nicht erfüllen. Es kann sogar zu unerwünschten Regeleingriffen kommen. Wenn beispielsweise der Gierwinkelgeschwindigkeitssensor um 180 Grad verdreht bezüglich der gewünschten Winkellage eingebaut wird, also z. B. über Kopf, dann führt dies zu unplausiblen Werten des abgegebenen Gierwinkelgeschwindigkeitssignals.

Der Erfindung liegt daher die Aufgabe zugrunde, ein einfaches und sicheres Verfahren zur Erkennung des fehlerhaften Einbaus eines Steuergerätes in einem Fahrzeug anzugeben.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß sie relativ einfach und mit geringem Aufwand durch ein Software-Unterprogramm in einem elektronischen Steuergerät üblicher Bauart realisierbar ist. Ein weiterer Vorteil ist, daß unterschiedlichste Arten von Einbaufehlern, wie nachfolgend noch näher erläutert, erkannt werden können. Weitere Vorteile sind eine relativ schnelle Erkennung von Fehlern, insbesondere eine Erkennung vor Einsetzen von unerwünschten Regelfunktionen.

Die Erfindung nutzt in einer vorteilhaften Ausgestaltung die Signale der vorhandenen Sensiermittel, um aus ihnen wenigstens eine erste und eine zweite Folge von Gierwinkelgeschwindigkeitswerten zu bestimmen, wobei die erste Folge auf den Signalen eines ersten Sensiermittels und die zweite Folge auf den Signalen eines zweiten Sensiermittel basiert.

In einer vorteilhaften Weiterbildung der Erfindung wird die Erkennung auf fehlerhaften Einbau eines Steuergerätes bei Überschreitung einer vorgegebenen Fahrgeschwindigkeit durchgeführt. Dies hat den Vorteil, daß bei geeigneter Auswahl der vorgegebenen Fahrgeschwindigkeit ein Fehlansprechen der Fehlererkennung infolge unzureichender Signalabgabe der Sensiermittel bei relativ geringer Fahrgeschwindigkeit vermieden werden kann.

In einer weiteren vorteilhaften Ausgestaltung der Erfindung werden zur Erkennung eines Fehlers die Vorzeichen der einander zugeordneten Werte der ersten und der zweiten Folge von Gierwinkelgeschwindigkeitswerten miteinander verglichen. Dies hat den Vorteil, daß insbesondere Fehler wie ein um einen Winkel von 180 Grad verdrehter Einbau eines Sensiermittels selektiv erkannt und angezeigt werden können.

Gemäß einer weiteren vorteilhaften Ausgestaltung der Erfindung kann ein Fehler erkannt werden, nachdem das Fahrzeug mindestens eine Linkskurve und eine Rechtskurve durchfahren hat. Dies hat den Vorteil, daß Störeinflüsse wie etwa eine Nullagenverschiebung (offset drift) der Sensiermittel kompensiert werden und nicht zu einem Fehlansprechen der Fehlererkennung führen.

Gemäß der Erfindung sind der Gierwinkelgeschwindigkeitssensor und/oder der Querbeschleunigungssensor in dem elektronischen Steuergerät angeordnet. Dies hat den Vorteil, daß diese Sensiermittel relativ gut vor Beschädigung und störenden Umwelteinflüssen, wie z.B. Feuchtigkeit, geschützt sind. Des weiteren vereinfacht sich die Montage der zuvor genannten Komponenten.

In einer weiteren vorteilhaften Ausgestaltung der Erfindung wird zwischen wenigstens zwei der folgenden Fehlerarten unterschieden:

a) das elektronische Steuergerät ist hinsichtlich der Fahrzeughochachse um 180 Grad verdreht bezüglich der erwünschten Winkellage eingebaut,

b) das elektronische Steuergerät ist hinsichtlich der Fahrzeuglängsachse um 180 Grad verdreht, bezüglich der erwünschten Winkellage eingebaut,

c) das elektronische Steuergerät ist hinsichtlich der Fahrzeugquerachse um 180 Grad verdreht bezüglich der erwünschten Winkellage eingebaut.

Weitere Vorteile der Erfindung sowie vorteilhafte Ausgestaltungen sind in dem nachfolgend beschriebenen Ausführungsbeispiel angegeben, welches anhand von Zeichnungen näher erläutert wird.

Es zeigen:

Fig. 1 ein Fahrzeug mit einer erfindungsgemäßen Anordnung in schematischer Darstellung und

Fig. 2 ein elektronisches Steuergerät mit darin integrierten Sensiermitteln sowie dessen bevorzugte Einbaulage in einem Fahrzeug und

Fig. 3 Zeitdiagramme einer bevorzugten Ausgestaltung der Erfindung.

In den Figuren werden gleiche Teile und Signale mit gleichen Bezugszeichen bezeichnet.

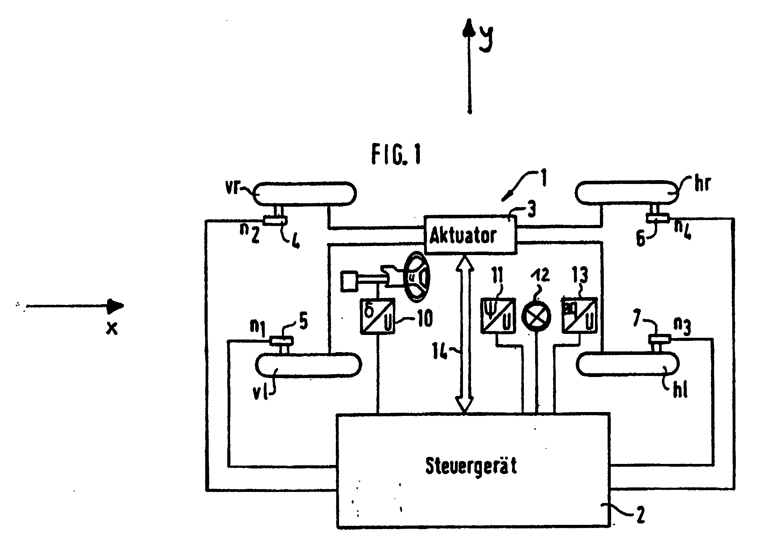

Ein in der Fig. 1 dargestelltes Fahrzeug (1) mit einer Längsachse (x) und einer Querachse (y) enthält eine Anordnung zum Auswerten der Signale eines Gierwinkelgeschwindigkeitssensors, die Bestandteil eines Gierwinkelgeschwindigkeits-Regelkreises ist, welcher zur Stabilisierung des Fahrverhaltens des Fahrzeuges im Sinne einer Fahrdynamikregelung dient. Dieser Regelkreis schließt ein elektronisches Steuergerät (2), einen Aktuator (3) und mehrere Sensoren ein: Vier Raddrehzahlsensoren (4, 5, 6, 7), die die Drehgeschwindigkeiten des vorderen linken Rades (vl), des vorderen rechten Rades (vr), des hinteren linken Rades (hl) und des hinteren rechten Rades (hr) messen, außerdem ein Lenkrad-Drehwinkelsensor (10), der Gierwinkelgeschwindigkeitssensor (11) und ein Querbeschleunigungssensor (13). Des weiteren ist eine Anzeigeeinrichtung (12) mit dem Steuergerät (2) verbunden. Die Anordnung kann noch weitere, hier nicht dargestellte Sensoren und Aktuatoren einschließen.

Das Fahrzeug (1) besitzt des weiteren eine Hochachse (z) (in der Fig. 1 nicht dargestellt), welche senkrecht zur Papierebene der Fig. 1 verläuft. Als Gierwinkelgeschwindigkeit wird in diesem Zusammenhang die Drehung des Fahrzeuges (1) um die Hochachse (z) pro Zeiteinheit verstanden.

Der Lenkrad-Drehwinkelsensor (10) dient zur Messung des von dem Fahrer eingestellten Lenkrad-Drehwinkels, welcher unter Verwendung des im jeweiligen Einsatzfall bekannten Übersetzungsverhältnisses des Lenkgetriebes in den Lenkwinkel ($\delta$) umgerechnet werden kann. Als Lenkwinkel ($\delta$) wird hierbei die Winkelabweichung lenkbarer Räder (vr, vl) von einer Parallelen zur Fahrzeuglängsachse (x) verstanden.

Im folgenden sei der Einfachheit halber angenommen, der Lenkrad-Drehwinkelsensor (10) gibt bereits den um das Übersetzungsverhältnis des Lenkgetriebes bereinigten Lenkwinkel ($\delta$) als Signal ab.

Der Aktuator (3) empfängt über eine Signalleitung oder einen Signalbus (14) Stellsignale des elektronischen Steuergeräts (2) und erzeugt daraufhin Giermomente, d. h. Drehmomente um die Hochachse des Fahrzeugs (1). Dies kann vorzugsweise durch ein unterschiedlich starkes Bremsen von Rädern auf der linken oder auf der rechten Fahrzeugseite erfolgen. Der Aktuator (3) und die Sensoren (4, 5, 6, 7, 10, 11, 13) sind als solche bekannt, sie werden hier deshalb im einzelnen nicht weiter beschrieben. Von den Sensoren empfängt das Steuergerät (2) folgende Signale:

$\delta$    Lenkwinkel, Signal von Sensor 10

$\dot{\psi}$    Gierwinkelgeschwindigkeit, Signal von Sensor 11

$a_q$    Querbeschleunigung, Signal von Sensor 13

$n_1$    Raddrehzahl vorne links, Signal von Sensor 5

$n_2$    Raddrehzahl vorne rechts, Signal von Sensor 4

$n_3$  Raddrehzahl hinten links, Signal von Sensor 7

$n_4$  Raddrehzahl hinten rechts, Signal von Sensor 6

Aus den vorstehend aufgeführten Sensorsignalen kann die Gierwinkelgeschwindigkeit des Fahrzeugs auf verschiedene Weise berechnet werden. Das Steuergerät (2) ist vorzugsweise mit einem digitalen Mikroprozessor ausgestattet, welcher mit vorgegebener Wiederholrate diese Berechnungen ausführt. Die einzelnen, fortlaufend berechneten Werte der Gierwinkelgeschwindigkeiten ergeben dann Folgen ($\dot{\psi}_1$, $\dot{\psi}_2$, $\dot{\psi}_3$). Aus den Signalen der Raddrehzahlsensoren (4, 5, 6, 7) wird unter Heranziehung des jeweiligen Radumfangs eine Fahrzeuggeschwindigkeit (v) ermittelt.

Die Folge ($\dot{\psi}_1$) wird aus dem Lenkwinkel ($\delta$) vorzugsweise gemäß folgender Gleichung ermittelt:

$$\dot{\psi}_1(\delta) = \frac{v}{L + E_G \cdot v^2} \cdot \delta \qquad [1]$$

Hierbei sind L und EG von der Fahrzeuggeometrie abhängige Größen, wobei L den Radstand und $E_G$ den Eigenlenkgradienten angibt. Der Eigenlenkgradient ist für die hier betrachteten Fahrsituationen eine Fahrzeugkonstante, die für ein zweiachsiges Fahrzeug gemäß folgender Beziehung bestimmt wird:

$$E_G = \frac{m_{Fzg} \cdot (C_h \cdot L_h - C_v \cdot L_v)}{L \cdot C_v \cdot C_h} \qquad [2]$$

Hierbei bezeichnet $m_{Fzg}$ die Fahrzeugmasse, $L_h$ den Abstand der Hinterachse vom Fahrzeugschwerpunkt, $L_v$ den Abstand der Vorderachse vom Fahrzeugschwerpunkt, $C_v$ die Schräglaufsteifigkeit der Vorderachse und $C_h$ die Schräglaufsteifigkeit der Hinterachse. Diese Größen sind fahrzeugspezifisch durch Versuche zu ermitteln. Bezüglich der näheren Definition der zuvor genannten Größen wird auf die Norm DIN 77000 vom Januar 1994 verwiesen.

Die Folge ($\dot{\psi}_2$) wird aus der Querbeschleunigung ($a_q$) vorzugsweise gemäß folgender Gleichung ermittelt:

$$\dot{\psi}_2(a_q) = \frac{a_q}{v} \qquad [3]$$

Die Folge ($\dot{\psi}_3$) entspricht unmittelbar den einzelnen, von dem Gierwinkelgeschwindigkeitssensor (11) ermittelten Gierwinkelgeschwindigkeitswerten:

$$\dot{\psi}_3(\dot{\psi}) = \dot{\psi} \qquad [4]$$

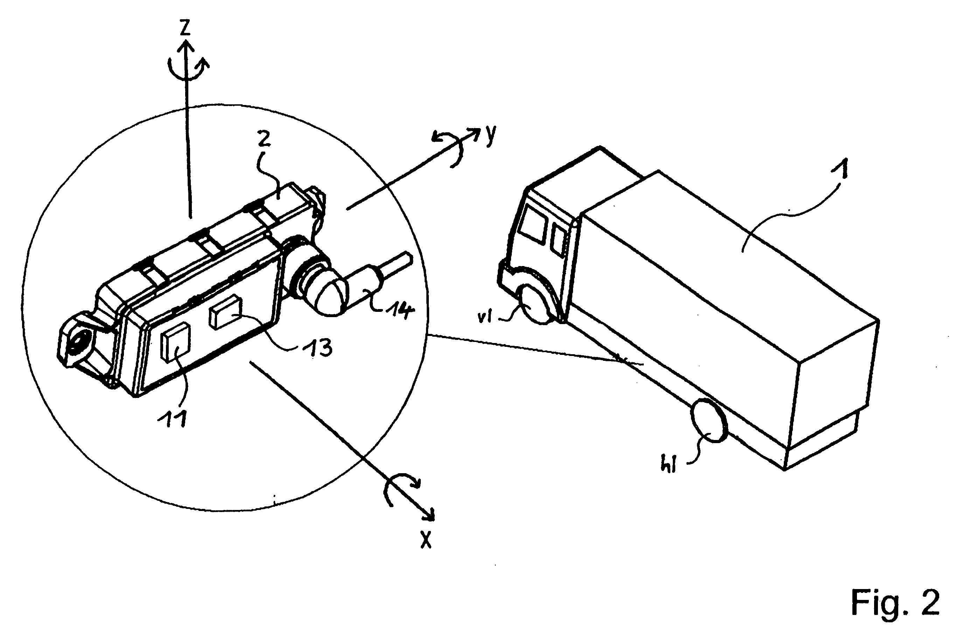

In der Fig. 2 ist das elektronische Steuergerät (2) sowie dessen bevorzugte Einbaulage in dem Fahrzeug (1) dargestellt. Das in der Fig. 2 dargestellte Steuergerät (2) stellt eine bevorzugte Ausführungsform des in der Fig. 1 dargestellten Steuergeräts dar, bei dem der Gierwinkelgeschwindigkeitssensor (11) sowie der Querbeschleunigungssensor (13) in das Steuergerät (2) baulich integriert sind. Hierdurch werden die Möglichkeiten des fehlerhaften Einbaus der Sensoren (11, 13) reduziert, da ein fehlerhafter Einbau nur durch unkorrekten Einbau des Steuergeräts (2) auftreten kann. Da die Lage der Sensoren (11, 13) zueinander fest vorgegeben ist, kann im Falle eines Einbaufehlers anhand der Signale dieser Sensoren unterschieden werden, in welcher Art, d. h. um welche der drei räumlichen Achsen (x, y, z), das Steuergerät (2) verdreht bezüglich der erwünschten Winkellage eingebaut ist.

Im folgenden sei angenommen, daß ein Steuergerät (2) der in der Fig. 2 dargestellten Art zum Einsatz kommt.

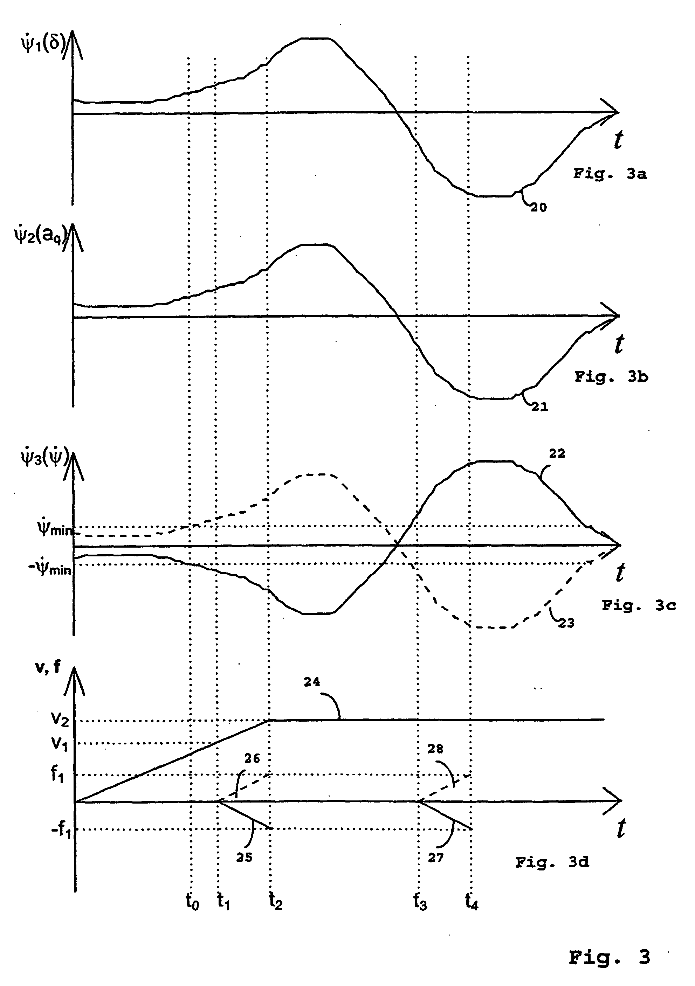

In der Fig. 3 ist der Verlauf der Folgen ($\dot{\psi}_1$, $\dot{\psi}_2$, $\dot{\psi}_3$) der Gierwinkelgeschwindigkeitswerte in den Zeitdiagrammen Fig. 3a, Fig. 3b und Fig. 3c als Zeitverläufe (20, 21, 22, 23) dargestellt. Des weiteren sind in dem Zeitdiagramm Fig. 3d die Geschwindigkeit des Fahrzeuges (v) sowie ein Fehlerzähler (f) gemeinsam dargestellt. Das Fahrzeug fährt in dem dargestellten Zeitraum zunächst eine Linkskurve und sofort darauf eine Rechtskurve.

Zum Zeitpunkt t = 0 beginnt das Fahrzeug, von der Geschwindigkeit Null an zu beschleunigen, bis eine Geschwindigkeit ($v_2$) erreicht worden ist. Bereits während der Beschleunigungsphase beginnt die Kurvenfahrt, was an einem betragsmäßigen Anstieg der Gierwinkelgeschwindigkeitswerte erkennbar ist. Zur Vermeidung von Fehlansprechen der Fehlererkennung bei kleinen Sensorsignalen infolge von überlagerten Störpegeln beginnt eine Auswertung der Gierwinkelgeschwindigkeitswerte erst ab Erreichen einer sensorspezifischen Mindest-Gierwinkelgeschwindigkeit ($\dot{\psi}_{min}$, $-\dot{\psi}_{min}$), was in der Darstellung gemäß Fig. 3 zum Zeitpunkt ($t_0$) erreicht sein soll. Des weiteren wird die Fehlererkennung erst bei Erreichen oder Überschreitung einer vorbestimmten Mindestgeschwindigkeit ($v_1$) durchgeführt. Durch eine geeignete Wahl dieser Mindestgeschwindigkeit ($v_1$), z. B. 30 km/h, wird einerseits eine sichere Signalabgabe aller Sensoren sichergestellt, andererseits kann ein Fehlansprechen der Fehlererkennung infolge von Rückwärtsfahrt vermieden werden, wenn die zuvor erwähnte Mindestgeschwindigkeit relativ hoch gewählt wird. Die Mindestgeschwindigkeit ($v_1$) wird in der Darstellung gemäß Fig. 3 zu dem Zeitpunkt ($t_1$) erreicht.

Bei freigegebener Fehlererkennungsfunktion, d. h. ab dem Zeitpunkt ($t_1$), überwacht das Steuergerät (2) die Folgen ($\dot{\psi}_1$, $\dot{\psi}_2$, $\dot{\psi}_3$) hinsichtlich Vorzeichen und Betrag.

Zur Fehlerunterscheidung werden in einer bevorzugten Ausgestaltung der Erfindung die Vorzeichen der Folgen ($\dot{\psi}_1$, $\dot{\psi}_2$, $\dot{\psi}_3$) als Vorzeichenwerte ($S_1$, $S_2$, $S_3$) ermittelt:

$$S_1 = \text{sgn}(\dot{\psi}_1) \qquad\qquad [5]$$

$$S_2 = \text{sgn}(\dot{\psi}_2) \qquad\qquad [6]$$

$$S_3 = \text{sgn}(\dot{\psi}_3) \qquad\qquad [7]$$

Die Vorzeichenwerte ($S_1$, $S_2$, $S_3$) enthalten als Ergebnis bei positivem Vorzeichen der Wert +1 und bei negativem Vorzeichen den Wert -1.

Unter Anwendung der Vorzeichenwerte ($S_1$, $S_2$, $S_3$) kann nun gemäß folgender Tabelle, deren Inhalt in dem Steuergerät (2) gespeichert ist, zwischen verschiedenen Einbaufehlern des Steuergeräts (2) unterschieden werden.

Tabelle 1:

| Fahrzustand | $S_1$ | $S_2$ | $S_3$ | Fehlerart |
|---|---|---|---|---|
| Linkskurve bzw. Rechtskurve | +1<br>-1 | +1<br>-1 | +1<br>-1 | Steuergerät (2) ist korrekt eingebaut, d.h. kein Fehler |
| Linkskurve bzw. Rechtskurve | -1<br>+1 | +1<br>-1 | +1<br>-1 | Steuergerät (2) ist hinsichtlich der Fahrzeuglängsachse (x) um 180 Grad verdreht bezüglich der erwünschten Winkellage eingebaut |
| Linkskurve bzw. Rechtskurve | +1<br>-1 | +1<br>-1 | -1<br>+1 | Steuergerät (2) ist hinsichtlich der Fahrzeugquerachse (y) um 180 Grad verdreht bezüglich der erwünschten Winkellage eingebaut |
| Linkskurve bzw. Rechtskurve | +1<br>-1 | -1<br>+1 | +1<br>-1 | Steuergerät (2) ist hinsichtlich der Fahrzeughochachse (z) um 180 Grad verdreht bezüglich der erwünschten Winkellage eingebaut |

Bezogen auf die in der Fig. 3 als Ausführungsbeispiel dargestellten Folgen bedeutet dies, daß in einem ersten Vergleichskriterium die Folge ($\dot{\psi}_2(a_q)$) gemäß Fig. 3b mit der Folge ($\dot{\psi}_1(\delta)$) gemäß Fig. 3a verglichen wird. Wie aus den Figuren 3a und 3b ersichtlich ist, ist der zeitliche Verlauf der Folgen ($\dot{\psi}_1$, $\dot{\psi}_2$) im wesentlichen sowohl nach Betrag als auch nach Vorzeichen gleich, was somit nicht zu einem Ansprechen der Fehlererkennung führt, da keine Anzeichen für einen inkorrekten Einbau des Querbeschleunigungssensors (13) bzw. des Steuergeräts (2) vorliegen.

In einem zweiten Vergleichskriterium wird die Folge ($\dot{\psi}_3(\psi)$) gemäß Fig. 3c mit der Folge ($\dot{\psi}_1(\delta)$) gemäß Fig. 3a verglichen. Im vorliegenden Ausführungsbeispiel sei angenommen, daß das Steuergerät (2) und damit auch der Gierwinkelgeschwindigkeitssensor (11) hinsichtlich der Fahrzeugquerachse (y) um 180 Grad verdreht bezüglich der erwünschten Winkellage eingebaut ist, was einen Einbaufehler darstellt, der zur Vermeidung unerwünschten Ansprechens der Fahrdynamikregelung erkannt werden muß. Die infolge des fehlerhaften Einbaus von dem Gierwinkelgeschwindigkeitssensor (11) abgegebene Gierwinkelgeschwindigkeitsfolge ($\dot{\psi}_3$) ist durch den Zeitverlauf (22) in der Fig. 3c dargestellt. Durch den ebenfalls in der Fig. 3c mit einer gestrichelten Linie dargestellten Zeitverlauf (23) wird der theoretische Verlauf der Folge ($\dot{\psi}_3$) bei korrektem Einbau des Steuergerätes (2) bzw. des Gierwinkelgeschwindigkeitssensors (11) angegeben.

In einem dritten Vergleichskriterium wird die Folge ($\dot{\psi}_3(\psi)$) gemäß Fig. 3c mit der Folge ($\dot{\psi}_2(a_q)$) gemäß Fig. 3b verglichen. Wie aus der Fig. 3 erkennbar ist, weisen die miteinander verglichenen Folgen ($\dot{\psi}_2$, $\dot{\psi}_3$) voneinander wesentlich abweichende Verläufe und insbesondere unterschiedliche Vorzeichen auf.

Nach dem Fahrzeugstart sind Eingriffe der Fahrdynamikregelung zunächst gesperrt, bis das Steuergerät (2) durch Ausführung der erfindungsgemäßen Fehlererkennungsfunktion auf einen korrekten Einbau der Sensiermittel geschlossen hat. In der Darstellung gemäß Fig. 3d wird zu dem Zeitpunkt ($t_1$) die erfindungsgemäße Fehlererken-

nungsfunktion freigegeben, nachdem die Fahrzeuggeschwindigkeit (v) den Mindestgeschwindigkeitswert ($v_1$) erreicht oder überschritten hat und gewisse Mindestbeträge ($\dot{\psi}_{min}$, -$\dot{\psi}_{min}$) der durch die Sensiermittel ermittelten Gierwinkelgeschwindigkeitswerte vorliegen. Sodann überwacht das Steuergerät (2) mittels der zuvor erwähnten Vergleichskriterien die miteinander zu vergleichenden Folgen auf unterschiedliche Vorzeichen. Unterschiedliche Vorzeichen treten beim vorliegenden Ausführungsbeispiel zwischen den Folgen ($\dot{\psi}_1$) und ($\dot{\psi}_3$) einerseits und zwischen den Folgen ($\dot{\psi}_2$) und ($\dot{\psi}_3$) andererseits auf. Hierdurch ausgelöst beginnt das Steuergerät (2) einen Fehlerzähler (f) fortlaufend zu dekrementieren, was in der Fig. 3d durch die Linie (25) dargestellt wird. Bei gleichen Vorzeichen hätte das Steuergerät (2) den Fehlerzähler (f) inkrementiert, was der gestrichelt dargestellten Linie (26) in der Fig. 3d entsprechen würde.

Zu dem Zeitpunkt ($t_2$) hat der Fehlerzähler (f) einen für einen gesicherten Verdacht auf fehlerhaften Einbau eines Sensiermittels ausreichenden Fehlererkennungs-Schwellwert (-$f_1$) erreicht. Das Steuergerät (2) speichert sodann die Information, daß während einer Linkskurve ein Verdacht auf einen Einbaufehler erkannt wurde. Zu diesem Zeitpunkt wird jedoch noch nicht endgültig auf das Vorliegen eines Fehlers bzw. im Falle der gestrichelten Verläufe (23, 26) auf das Vorliegen eines fehlerfreien Fahrdynamikregelsystems geschlossen.

Vorzugsweise beobachtet das Steuergerät (2) die Folgen ($\dot{\psi}_1$, $\dot{\psi}_2$, $\dot{\psi}_3$) weiter, bis das Fahrzeug eine Rechtskurve fährt, wobei die Reihenfolge der Kurvenverläufe für die Erkennung des Einbaufehlers unerheblich ist. Das bedeutet, ein fehlerhafter oder fehlerfreier Zustand wird sowohl nach einer Linkskurve und einer folgenden Rechtskurve als auch nach einer Rechtskurve und einer nachfolgenden Linkskurve erkannt.

Zu dem Zeitpunkt ($t_3$) befindet sich das Fahrzeug in einer für eine Auswertung der Gierwinkelgeschwindigkeitswerte ausreichenden Kurvenfahrt bei ebenfalls ausreichend hoher Fahrgeschwindigkeit (v) oberhalb der Mindestgeschwindigkeit ($v_1$). Wegen des weiterhin vorliegenden Vorzeichenunterschiedes zwischen den Folgen ($\dot{\psi}_1$, $\dot{\psi}_3$) wird der Fehlerzähler analog zu der zuvor beschriebenen Weise dekrementiert (Linie 27) und erreicht zu dem Zeitpunkt ($t_4$) den Fehlererkennungs-Schwellwert (-$f_1$). Zu diesem Zeitpunkt erkennt dann das Steuergerät (2) den Einbaufehler und sperrt für die Dauer der Fahrt des Fahrzeugs sämtliche Funktionen der Fahrdynamikregelung.

Durch Vergleich der Vorzeichenwerte ($S_1$, $S_2$, $S_3$) mit den in der Tabelle 1 angegebenen Werten ermittelt das Steuergerät außerdem die Art des Einbaufehlers und speichert diese in einem nichtflüchtigen Speicher zwecks Vereinfachung einer späteren Fehlersuche und Reparatur. Außerdem aktiviert das Steuergerät (2) die Anzeigeeinrichtung (12) und signalisiert so dem Fahrer des Fahrzeuges den Einbaufehler. Hierdurch ist der Fahrer auch darüber informiert, daß die Regelfunktionen der Fahrdynamikregelung nicht zur Verfügung stehen. Die Fehlerart wird in einer vorteilhaften Ausgestaltung der Erfindung ebenfalls mittels der Anzeigeeinrichtung (12) angezeigt, z. B. mittels Blinkcode.

Bei korrektem Einbau aller Sensiermittel würde der Fehlerzähler (f) in der Rechtskurve den durch die gestrichelte Linie (28) dargestellten Verlauf nehmen. In diesem Fall würde das Steuergerät (2), nachdem es zuvor den Verlauf (26) des Fehlerzählers (f) erkannt und gespeichert hat, zu dem Zeitpunkt ($t_4$) die Fahrdynamikregelungsfunktion freigeben.

## Patentansprüche

1. Verfahren zur Erkennung des fehlerhaften Einbaus eines Steuergerätes (2) in einem Fahrzeug (1), wobei in dem Fahrzeug Sensiermittel (10, 11, 13) vorgesehen sind, welche zur Sensierung von das Fahrverhalten des Fahrzeuges charakterisierenden Größen ($\delta$, $a_q$, $\dot{\psi}$) dienen, aus denen jeweils die Gierwinkelgeschwindigkeit ($\dot{\psi}(\delta)$, $\dot{\psi}(a_q)$, $\dot{\psi}(\dot{\psi})$) des Fahrzeuges bestimmbar ist, wobei als Sensiermittel ein Gierwinkelgeschwindigkeitssensor (11) und ein Querbeschleunigungssensor (13) vorgesehen sind, wobei der Gierwinkelgeschwindigkeitssensor (11) und der Querbeschleunigungssensor (13) in dem Steuergerät (2) angeordnet sind, wobei durch Auswertung der Signale der Sensiermittel (10, 11, 13) wenigstens eine erste und eine zweite Folge ($\dot{\psi}_1$, $\dot{\psi}_2$, $\dot{\psi}_3$) von Gierwinkelgeschwindigkeitswerten ermittelt wird und ein fehlerhafter Einbau des Steuergerätes (2) erkannt wird, wenn bei fahrendem Fahrzeug (1) eine charakteristische Abweichung zwischen den einander zugeordneten Gierwinkelgeschwindigkeitswerten der ersten und der zweiten Folge ($\dot{\psi}_1$, $\dot{\psi}_2$, $\dot{\psi}_3$) auftritt.

2. Verfahren nach Anspruch 1, **dadurch gekennzeichnet, daß** die Erkennung auf fehlerhaften Einbau des Steuergerätes (2) bei Überschreitung einer vorgegebenen Fahrgeschwindigkeit ($v_1$) durchgeführt wird.

3. Verfahren nach einem der vorhergehenden Ansprüche, **dadurch gekennzeichnet, daß** als Sensiermittel ein Lenkwinkelsensor (10) vorgesehen ist.

4. Verfahren nach einem der vorhergehenden Ansprüche, **dadurch gekennzeichnet, daß** zur Erkennung eines Fehlers die Vorzeichen der einander zugeordneten Gierwinkelgeschwindigkeitswerte wenigstens der ersten und der zweiten Folge ($\dot{\psi}_1$, $\dot{\psi}_2$, $\dot{\psi}_3$) miteinander verglichen werden.

**5.** Verfahren nach einem der vorhergehenden Ansprüche, **dadurch gekennzeichnet, daß** ein Fehler erkannt werden kann, nachdem das Fahrzeug (1) mindestens eine Linkskurve und eine Rechtskurve durchfahren hat.

**6.** Verfahren nach einem der vorhergehenden Ansprüche, **dadurch gekennzeichnet, daß** zwischen wenigstens zwei der folgenden Fehlerarten unterschieden wird:

a) das elektronische Steuergerät (2) ist hinsichtlich der Fahrzeughochachse (z) um 180 Grad verdreht bezüglich der erwünschten Winkellage eingebaut,

b) das elektronische Steuergerät (2) ist hinsichtlich der Fahrzeuglängsachse (x) um 180 Grad verdreht bezüglich der erwünschten Winkellage eingebaut,

c) das elektronische Steuergerät (2) ist hinsichtlich der Fahrzeugquerachse (y) um 180 Grad verdreht bezüglich der erwünschten Winkellage eingebaut.

**7.** Verfahren nach einem der vorhergehenden Ansprüche, **dadurch gekennzeichnet, daß** ein erkannter Fehler und/oder die Fehlerart über eine Anzeigeeinrichtung (12) angezeigt wird.

**Claims**

**1.** Method for detection of faulty installation of a control unit (2) in a vehicle (1), sensing means (10,11,13) being provided in the vehicle which serve to sense variables ($\delta$, $a_q$, $\dot{\Psi}$) characterising the performance of the vehicle and from which respectively the yaw angle rate ($\dot{\Psi}(\delta)$, $\dot{\Psi}(a_q)$, $\dot{\Psi}(\dot{\Psi})$) of the vehicle is determinable, wherein as sensing means a yaw angle rate sensor (11) and a transverse acceleration sensor (13) are provided, the yaw angle rate sensor (11) and the transverse acceleration sensor (13) being arranged in the control unit (2), wherein by evaluating the signals of the sensing means (10, 11,13) at least a first and a second sequence ($\dot{\Psi}_1$, $\dot{\Psi}_2$, $\dot{\Psi}_3$) of yaw angle rate values are determined and a faulty installation of the control unit (2) is detected when, as the vehicle (1) is being driven, a characteristic discrepancy occurs between the associated yaw angle rate values of the first and the second sequence ($\dot{\Psi}_1$, $\dot{\Psi}_2$, $\dot{\Psi}_3$).

**2.** Method according to claim 1, **characterised in that** detection of faulty installation of the control unit (2) is performed when a predetermined vehicle speed ($v_1$) is exceeded.

**3.** Method according to any one of the preceding claims, **characterised in that** a steering angle sensor (10) is provided as sensing means.

**4.** Method according to any one of the preceding claims, **characterised in that**, to detect a fault, the signs of the yaw angle rate values associated with one another of at least the first and the second sequences ($\dot{\Psi}_1$, $\dot{\Psi}_2$, $\dot{\Psi}_3$) are compared with one another.

**5.** Method according to any one of the preceding claims, **characterised in that** a fault is detected once the vehicle (1) has negotiated at least one left-hand bend and one right-hand bend.

**6.** Method according to any one of the preceding claims, **characterised in that** a distinction is made between at least two of the following types of fault:

a) the electronic control unit (2) is installed incorrectly as regards the desired angular position, turned through 180 degrees with respect to the vertical axis (z) of the vehicle,

b) the electronic control unit (2) is installed incorrectly as regards the desired angular position, turned through 180 degrees with respect to the longitudinal axis (x) of the vehicle,

c) the electronic control unit (2) is installed incorrectly as regards the desired angular position, turned through 180 degrees with respect to the transverse axis (y) of the vehicle.

**7.** Method according to any one of the preceding claims, **characterised in that** a detected fault and/or the type of fault is indicated by means of an indicating device (12).

## EP 1 118 519 B1

**Revendications**

1. Procédé pour identifier le montage défectueux d'un appareil de commande (2) dans un véhicule (1), selon lequel dans le véhicule sont prévus des moyens de détection (10, 11, 13), qui sont utilisés pour détecter des grandeurs ($\delta$, $a_q$, $\dot{\psi}$), qui caractérisent le comportement de déplacement du véhicule et à partir desquels on peut déterminer respectivement la vitesse angulaire de lacet ($\dot{\psi}(\delta)$, $\dot{\psi}(a_q)$, $\dot{\psi}$ ($\dot{\psi}$)) du véhicule, et selon lequel on prévoit comme moyens de détection un capteur (11) de la vitesse angulaire de lacet et un capteur (13) d'accélération transversale, et selon lequel le capteur (11) de la vitesse angulaire de lacet et le capteur (13) de l'accélération transversale sont disposés dans l'appareil de commande (2), et selon lequel, au moyen de l'évaluation des signaux des moyens de détection (10, 11, 13), au moins des première et seconde suites ($\dot{\psi}_1$, $\dot{\psi}_2$, $\dot{\psi}_3$) de valeurs de vitesse angulaire de lacet sont déterminées et un montage défectueux de l'appareil de commande (1) est identifié alors que lorsque le véhicule (1) se déplace, un écart caractéristique apparaît entre les valeurs de vitesse angulaire de lacet, associées entre elles, des première et seconde suites ($\dot{\psi}_1$, $\dot{\psi}_2$, $\dot{\psi}_3$).

2. Procédé selon la revendication 1, **caractérisé en ce que** l'identification d'un montage défectueux de l'appareil de commande (1) est exécutée lors du dépassement d'une vitesse de déplacement prédéterminée ($v_1$).

3. Procédé selon l'une des revendications précédentes, **caractérisé en ce qu'**un détecteur (10) de l'angle de braquage est prévu en tant que moyens de détection.

4. Procédé selon l'une des revendications précédentes, **caractérisé en ce que** pour l'identification d'un défaut, les signes des valeurs de la vitesse angulaire de lacet, qui sont associées entre elles, au moins des première et seconde suites ($\dot{\psi}_1$, $\dot{\psi}_2$, $\dot{\psi}_3$) sont comparées entre eux.

5. Procédé selon l'une des revendications précédentes, **caractérisé en ce qu'**un défaut peut être identifié après que le véhicule (1) a parcouru au moins une courbe à gauche et une courbe à droite.

6. Procédé selon l'une des revendications précédentes, **caractérisé en ce qu'**on établit une différence entre au moins deux des types d'erreurs suivants:

   a) l'appareil de commande électronique (2) est monté en étant pivoté sur 180 degrés, autour de l'axe vertical (z) du véhicule, par rapport à la position angulaire désirée,
   b) l'appareil de commande électronique (2) est monté en étant pivoté de 180 degrés autour de l'axe longitudinal (x) par rapport avec l'axe longitudinal (x) du véhicule, par rapport à la position angulaire désirée,
   c) l'appareil de commande électronique (2) est monté en étant pivoté de 180 degrés autour de l'axe transversal (y) du véhicule par rapport à la position angulaire désirée.

7. Procédé selon l'une des revendications précédentes, **caractérisé en ce qu'**un défaut identifié et/ou le type de défaut sont affichés au moyen d'un dispositif d'affichage (12).

FIG.1

Fig. 2

Fig. 3a

Fig. 3b

Fig. 3c

Fig. 3d

Fig. 3